# EUROPEAN PATENT SPECIFICATION

(11) **EP 2 398 281 B1**
(45) Date of publication and mention of the grant of the patent: **21.11.2018**
(21) Application number: 11170344.3
(22) Date of filing: 17.06.2011
(51) Int. Cl.: H04W 8/08, H04L 12/721, H04L 12/741

(54) **Apparatus and method for performing local routing in a mobile communication system**
Verfahren und Vorrichtung zu Durchführung von lokalem Routing in einem mobilen Kommunikationssystem
Procédé et appareil pour effectuer un routage local dans un système de communication mobile

(30) Priority: 18.06.2010 KR 20100058208
(43) Date of publication of application: 21.12.2011
(73) Proprietor: Samsung Electronics Co., Ltd., Suwon-si, Gyeonggi-do, 443-742 (KR)
(72) Inventor: Kong, Dong-Keon, Gyeonggi-do 442-742 (KR); Alper, Yegin, Gyeonggi-do 442-742 (KR); Lee, Ji-Cheol, Gyeonggi-do 442-742 (KR)
(74) Representative: Nederlandsch Octrooibureau

(56) References cited:
- EP-A1- 2 045 990
- WO-A1-2009/109349
- US-A1- 2010 020 779

## Description

### BACKGROUND OF THE INVENTION

### 1. Field of the Invention

The present invention relates to an apparatus and method for performing local routing in a mobile communication system.

### 2. Description of the Related Art

Extensive research has been conducted to provide services with various Quality of Service (QoS) requirements to Mobile Stations (MSs) in future-generation communication systems. Major future-generation communication systems include an Institute of Electrical and Electronics Engineers (IEEE) 802.16 communication system, a Mobile Worldwide Interoperability for Microwave Access (WiMAX) system, and the like. The Mobile WiMAX communication system is based on IEEE 802.16.

Now a routing method in the Mobile WiMAX communication system will be described below.

First of all, a description will be given of a method for routing a packet between MSs connected to the same Access Serving Network GateWay (ASN-GW) which is connected to a single Core Router (CR) in a typical Mobile WiMAX communication system. The CR is an entity included in a Connectivity Serving Network (CSN) and the ASN-GW is an entity included in an Access Serving Network (ASN). While for the sake of convenience, a CR is used as an example of an entity included in a CSN and an ASN-GW is used as an example of an entity included in an ASN, the CR may be replaced with another entity in the CSN; for example, a Home Agent (HA) and the ASN-GW may also be replaced with another entity in the ASN.

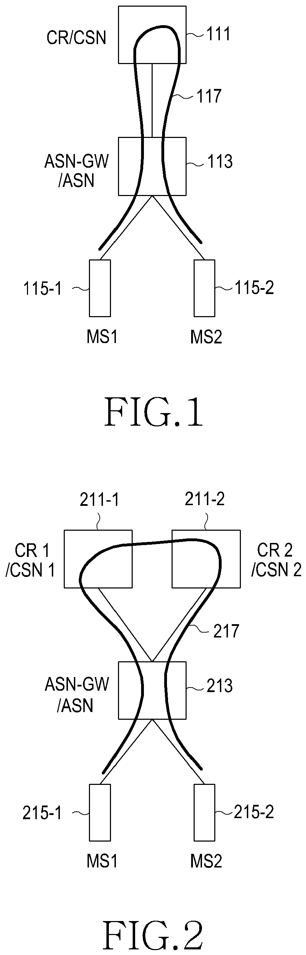

FIGURE 1 illustrates a routing method between MSs connected to the same ASN-GW that is connected to a single CR in a typical Mobile WiMAX communication system.

Referring to FIGURE 1, an Internet Protocol (IP) packet is routed from a first MS 115-1 (MS1) to a second MS 115-2 (MS2) in a data path 117 running from MS1 to MS2 through an ASN-GW 113, a CR 111, and the ASN-GW 113 again. The CR 111 is connected to an Authorization, Authentication and Accounting (AAA) server (not shown). The AAA server may be incorporated into the CR 111.

FIGURE 2 illustrates a routing method between MSs connected to the same ASN-GW that is connected to different CRs in a typical Mobile WiMAX communication system.

Referring to FIGURE 2, an IP packet is routed from a first MS 215-1 (MS1) to a second MS 215-2 (MS2) in a data path 217 running from MS1 to MS2 through an ASN-GW 213, a first CR 211-1 (CR1), a second CR 211-2 (CR2), and the ASN-GW 213. CR1 is connected to a first AAA server (not shown) and CR2 is connected to a second AAA server (not shown). The first AAA server may be incorporated into CR1 and the second AAA server may be incorporated into CR2.

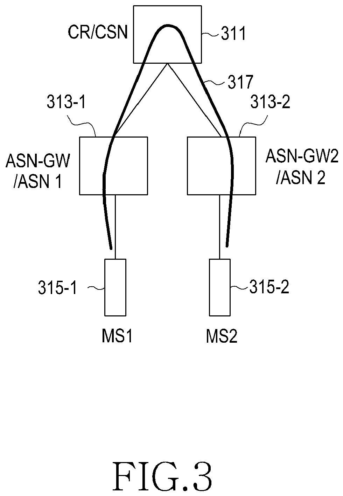

FIGURE 3 illustrates a routing method between MSs connected to different ASN-GWs that are connected to the same CR in a typical Mobile WiMAX communication system.

Referring to FIGURE 3, an IP packet is routed from a first MS 315-1 (MS1) to a second MS 315-2 (MS2) in a data path 317 running from MS1 to MS2 through a first ASN-GW 313-1 (ASN-GW1), a CR 311, and a second ASN-GW 313-2 (ASN-GW2). The CR 311 is connected to an AAA server. The AAA server may be incorporated into the CR 311.

As described above with reference to FIGURES 1, 2 and 3, an IP packet may be routed from one MS to another MS in a data path running through an ASN-GW and a CR in the typical Mobile WiMAX communication system.

Because the data path runs through the ASN-GW and the CR, IP packet routing takes much time. Moreover, due to use of resources at the ASN-GW, the CR, and the MSs for IP packet routing, the overall efficiency of system resources is decreased.

EP 2 045 990 A1 discloses an access service network for use in a Mobile IP based communication system providing access to a public network. The access service network further comprises an access router comprising a data storage means for storing a list of special local correspondent nodes providing special services.

US 2010 / 020 779 A1 discloses a base station which routes data between a wireless communication device and a local device through a local network. When a route-local indicator is received from the wireless communication device, the base station routes data through the local network to the local device without routing the data through a cellular network.

### SUMMARY OF THE INVENTION

To address the above-discussed deficiencies of the prior art, it is a primary object to provide at least the advantages described below. Accordingly, an aspect of embodiments of the present invention is to provide an apparatus and method for performing local routing in a mobile communication system.

Another aspect of embodiments of the present invention is to provide a local routing apparatus and method for routing an IP packet in a data path that runs through a minimum number of entities involved in the IP packet routing in a mobile communication system.

A further aspect of embodiments of the present invention is to provide a local routing apparatus and method for routing an IP packet with minimum resources in a mobile communication system.

In accordance with an embodiment of the present invention, there is provided a local routing method of an Access Serving Network GateWay (ASN-GW) in a mobile communication system. According to the method, if a flow between a first Mobile Station (MS) and a second MS is a local routing candidate, an Authorization, Authentication and Accounting (AAA) request message including information indicating a start of local routing is received from an AAA server. Also according to the method, the local routing is performed between the first MS and the second MS after transmitting to the AAA server an AAA response message including information indicating that the local routing will start in response to the AAA request message. The local routing is based on consent among entities involved in the local routing.

In accordance with another embodiment of the present invention, there is provided a local routing method of an AAA server in a mobile communication system. According to the method, if a flow between a first MS and a second MS is a local routing candidate, an AAA request message including information indicating a start of local routing is transmitted to an ASN-GW. Also according to the method, an AAA response message including information indicating that the local routing will start is received from the ASN-GW in response to the AAA request message. The local routing is based on consent among entities involved in the local routing.

In accordance with another embodiment of the present invention, there is provided a local routing method of an ASN-GW in a mobile communication system. According to the method, if a flow between a first MS and a second MS is a local routing candidate, an AAA request message including information indicating a start of local routing is transmitted to a first AAA server and a second AAA server. Also according to the method, an AAA response message including first information indicating that the local routing will start is received from the first AAA server in response to the AAA request message. Further according to the method, an AAA response message including the first information is received from the second AAA server, and the local routing is performed between the first MS and the second MS. The local routing is based on consent among entities involved in the local routing.

In accordance with another embodiment of the present invention, there is provided a local routing method of an AAA server in a mobile communication system. According to the method, an AAA request message including information indicating a start of local routing is received from an ASN-GW. Also according to the method, an AAA response message including information indicating that the local routing will start is transmitted to the ASN-GW in response to the AAA request message. The local routing is based on consent among entities involved in the local routing.

In accordance with another embodiment of the present invention, there is provided a local routing method of an ASN-GW in a mobile communication system. According to the method, if a flow between a first MS and a second MS is a local routing candidate, an AAA request message including first information and second information is received from an AAA server, the first information indicating a start of local routing and the second information indicating that the ASN-GW will take charge of the local routing. Also according to the method, an inter-ASN request message including the first information is transmitted to a second ASN-GW other than the ASN-GW. Further according to the method, an inter-ASN response message including third information indicating the start of the local routing is received from the second ASN-GW in response to the inter-ASN request message. Also according to the method, an AAA response message including the third information is transmitted to the AAA server, and the local routing is performed between the first MS and the second MS after transmitting the AAA response message to the AAA server. The local routing is based on consent among entities involved in the local routing.

In accordance with another embodiment of the present invention, there is provided a local routing method of an ASN-GW in a mobile communication system. According to the method, if a flow between a first MS and a second MS is a local routing candidate, an AAA request message including first information indicating a start of local routing is received from an AAA server. Also according to the method, an inter-ASN request message including the first information is received from a second ASN-GW other than the ASN-GW. Further according to the method, an inter-ASN response message including second information indicating the start of the local routing is transmitted to the second ASN-GW in response to the inter-ASN request message, and an AAA response message including the second information is transmitted to the AAA server. The local routing is based on consent among entities involved in the local routing.

In accordance with another embodiment of the present invention, there is provided a local routing method of an AAA server in a mobile communication system. According to the method, if a flow between a first MS and a second MS is a local routing candidate, an AAA request message including first information indicating a start of local routing is transmitted to a first ASN-GW. Also according to the method, an AAA request message including the first information and second information indicating that the second ASN-GW will take charge of the local routing is transmitted to a second ASN-GW. Further according to the method, an AAA response message including third information indicating that the local routing will start is received from each of the first ASN-GW and the second ASN-GW. The local routing is based on consent among entities involved in the local routing.

In accordance with another embodiment of the present invention, there is provided an ASN-GW in a mobile communication system. The ASN-GW includes a reception unit configured to receive an AAA request message including information indicating a start of local routing from an AAA server, if a flow between a first MS and a second MS is a local routing candidate. The ASN-GW also includes a transmission unit configured to transmit to the AAA server an AAA response message including information indicating that the local routing will start in response to the AAA request message. The ASN-GW further includes a control unit configured to perform the local routing between the first MS and the second MS. The local routing is based on consent among entities involved in the local routing.

In accordance with another embodiment of the present invention, there is provided an AAA server in a mobile communication system. The AAA server includes a transmission unit configured to transmit an AAA request message including information indicating a start of local routing to an ASN-GW, if a flow between a first MS and a second MS is a local routing candidate. The AAA server also includes a reception unit configured to receive from the ASN-GW an AAA response message including information indicating that the local routing will start in response to the AAA request message. The local routing is based on consent among entities involved in the local routing.

In accordance with another embodiment of the present invention, there is provided an ASN-GW in a mobile communication system. The ASN-GW includes a transmission unit configured to transmit an AAA request message including information indicating a start of local routing to a first AAA server and a second AAA server, if a flow between a first MS and a second MS is a local routing candidate. The ASN-GW also includes a reception unit configured to receive from the first AAA server an AAA response message including first information indicating that the local routing will start in response to the AAA request message, and receive from the second AAA server an AAA response message including the first information. The ASN-GW further includes a control unit configured to perform the local routing between the first MS and the second MS. The local routing is based on consent among entities involved in the local routing.

In accordance with another embodiment of the present invention, there is provided an AAA server in a mobile communication system. The AAA server includes a reception unit configured to receive an AAA request message including information indicating a start of local routing from an ASN-GW. The AAA server also includes a transmission unit configured to transmit to the ASN-GW an AAA response message including information indicating that the local routing will start in response to the AAA request message. The local routing is based on consent among entities involved in the local routing.

In accordance with another embodiment of the present invention, there is provided an ASN-GW in a mobile communication system. The ASN-GW includes a reception unit configured to receive from an AAA server an AAA request message including first information and second information, the first information indicating a start of local routing and the second information indicating that the ASN-GW will take charge of the local routing, if a flow between a first MS and a second MS is a local routing candidate, and receive from a second ASN-GW other than the ASN-GW an inter-ASN response message including third information indicating the start of the local routing in response to an inter-ASN request message including the first information. The ASN-GW also includes a transmission unit configured to transmit the inter-ASN request message to the second ASN-GW and transmit an AAA response message including the third information to the AAA server. The ASN-GW further includes a control unit configured to perform the local routing between the first MS and the second MS. The local routing is based on consent among entities involved in the local routing.

In accordance with another embodiment of the present invention, there is provided an ASN-GW in a mobile communication system. The ASN-GW includes a reception unit configured to receive from an AAA server an AAA request message including first information indicating a start of local routing, if a flow between a first MS and a second MS is a local routing candidate, and receive an inter-ASN request message including the first information from a second ASN-GW other than the ASN-GW. The ASN-GW also includes a transmission unit configured to transmit to the second ASN-GW an inter-ASN response message including third information indicating the start of the local routing in response to the inter-ASN request message, and transmit an AAA response message including the third information to the AAA server. The local routing is based on consent among entities involved in the local routing.

In accordance with a further embodiment of the present invention, there is provided an AAA server in a mobile communication system. The AAA server includes a transmission unit configured to transmit an AAA request message including first information indicating a start of local routing to a first ASN-GW, if a flow between a first MS and a second MS is a local routing candidate, and transmit to a second ASN-GW an AAA request message including the first information and second information indicating that the second ASN-GW will take charge of the local routing. The ASN-GW also includes a reception unit configured to receive from each of the first ASN-GW and the second ASN-GW an AAA response message including third information indicating that the local routing will start. The local routing is based on consent among entities involved in the local routing.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates a routing method between Mobile Stations (MSs) connected to the same Access Serving Network GateWay (ASN-GW) which is connected to a single Core Router (CR) in a typical Mobile Worldwide interoperability for Microwave Access (WiMAX) communication system;
FIGURE 2 illustrates a routing method between MSs connected to the same ASN-GW which is connected to different CRs in a typical WiMAX communication system;
FIGURE 3 illustrates a routing method between MSs connected to different ASN-GWs which are connected to the same CR a the typical WiMAX communication system;
FIGURE 4 is a flowchart illustrating an operation for detecting a local routing candidate at an ASN-GW in a Mobile WiMAX communication system according to an embodiment of the present invention;
FIGURE 5 is a flowchart illustrating an operation for detecting a local routing candidate at a CR in a Mobile WiMAX communication system according to an embodiment of the present invention;
FIGURE 6 illustrates a local routing method between MSs connected to the same ASN-GW that is connected to a single CR in a Mobile WiMAX communication system according to an embodiment of the present invention;
FIGURE 7 is a diagram illustrating a signal flow for a signal transmission and reception operation between an Authorization, Authentication and Accounting (AAA) server and an ASN-GW illustrated in FIGURE 6;
FIGURE 8 illustrates a local routing method between MSs connected to the same ASN-GW that is connected to different CRs in a Mobile WiMAX communication system according to another embodiment of the present invention;
FIGURE 9 is a diagram illustrating a signal flow for a signal transmission and reception operation among a first AAA server, a second AAA server, and an ASN-GW illustrated in FIGURE 8;
FIGURE 10 illustrates a local routing method between MSs connected to different ASN-GWs that are connected to the same CR in a Mobile WiMAX communication system according to a further embodiment of the present invention;
FIGURE 11 is a diagram illustrating a signal flow for a signal transmission and reception operation among an AAA server, a first ASN-GW, and a second ASN-GW illustrated in FIGURE 10;
FIGURE 12 is a diagram illustrating a signal flow for a signal transmission and reception operation along with a crypto protection process among the AAA server, the first ASN-GW, and the second ASN-GW illustrated in FIGURE 10;
FIGURE 13 is a block diagram of an AAA server in a Mobile WiMAX communication system according to an embodiment of the present invention; and
FIGURE 14 is a block diagram of an ASN-GW server in a Mobile WiMAX communication system according to an embodiment of the present invention.

Throughout the drawings, the same drawing reference numerals will be understood to refer to the same elements, features and structures.

### DETAILED DESCRIPTION OF THE INVENTION

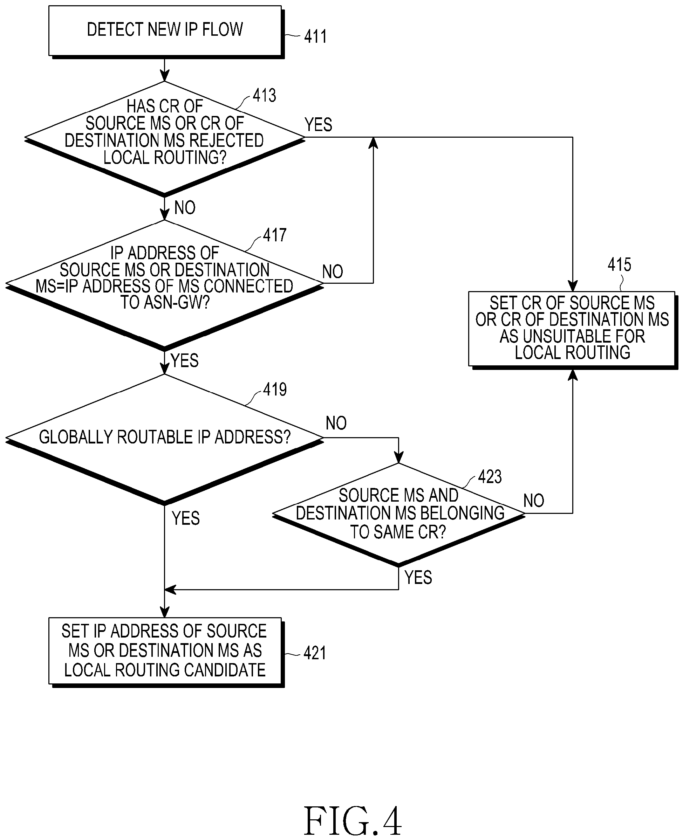

FIGURES 4 through 14, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile communication system.

Embodiments of the present invention provide apparatuses and methods for performing local routing in a mobile communication system. The following description is given with the appreciation that a Mobile Worldwide interoperability for Microwave Access (Mobile WiMAX) communication system is used as an example of a mobile communication system. However, it is to be clearly understood that the apparatuses and methods for performing local routing according to the embodiments of the present invention are also applicable to other mobile communication systems such as an Institute of Electrical and Electronics Engineers (IEEE) 802.16m communication system.

The description of the embodiments of the present invention is based on the assumption that an entity included in a Connectivity Serving Network (CSN) is a Core Router (CR) and an entity included in an Access Serving Network (ASN) is an Access Serving Network GateWay (ASN-GW). However, this is purely exemplary. Thus the CR may be replaced with another entity in the CSN; for example, a Home Agent (HA) and the ASN-GW may also be replaced with another entity in the ASN.

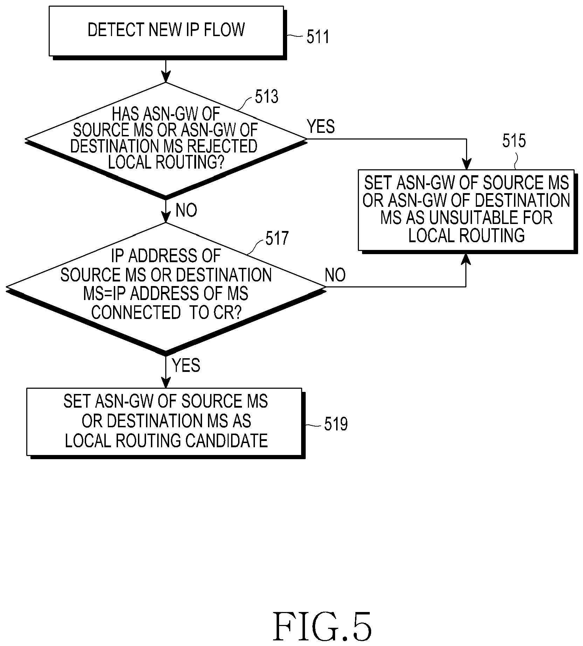

In the local routing methods according to the embodiments of the present invention, a CR and an ASN-GW should be able to detect Internet Protocol (IP) flows of local routing candidates between a source Mobile Station (MS) and a destination MS. With reference to FIGURES 4 and 5, operations for detecting a local routing candidate at the ASN-GW and the CR will be described. An IP flow may be defined with a source IP address and a destination IP address. Once a local routing candidate is detected and entities involved in local routing reach consent, the local routing starts.

FIGURE 4 is a flowchart illustrating an operation for detecting a local routing candidate at an ASN-GW in a Mobile WiMAX communication system according to an embodiment of the present invention.

Referring to FIGURE 4, the ASN-GW continuously monitors whether a new IP flow has been detected. Upon detection of a new IP flow in block 411, the ASN-GW checks whether a CR of an MS using a source IP address (i.e. a source MS) or a CR of an MS using a destination IP address (i.e. a destination MS) has ever rejected local routing between the source MS and the destination MS during initial network entry of the source MS and the destination MS in block 413. If the CR of the source MS or the CR of the destination MS has ever rejected local routing between the source MS and the destination MS, the ASN-GW sets the CR of the source MS or the CR of the destination MS as unsuitable for local routing in block 415. The CR of the source MS or the CR of the destination MS set as unsuitable for local routing is not used for local routing.

Alternatively, if the CR of the source MS or the CR of the destination MS has not rejected local routing between the source MS and the destination MS in block 413, the ASN-GW determines whether the IP address of the source MS or the IP address of the destination MS matches an IP address of an MS connected to the ASN-GW in block 417. If the IP address of the source MS or the IP address of the destination MS does not match the IP address of any MS connected to the ASN-GW, the ASN-GW proceeds to block 415.

If the IP address of the source MS or the IP address of the destination MS matches the IP address of an MS connected to the ASN-GW, the ASN-GW checks whether the IP address of the source MS or the IP address of the destination MS is a globally routable IP address in block 419. If the IP address of the source MS or the IP address of the destination MS is a globally routable IP address, the ASN-GW sets the IP address of the source MS or the destination MS as a local routing candidate in block 421.

Alternatively, if the IP address of the source MS or the IP address of the destination MS is not a globally routable IP address, the ASN-GW compares the CR of the source MS with the CR of the destination MS in block 423. If the source MS and the destination MS belong to the same CR, the ASN-GW goes to block 421.

If the source MS and the destination MS belong to different CRs, the ASN-GW goes to block 415.

Regarding an IP flow which a CR (the same CR to which the source MS and the destination MS are connected) or CRs (different CRs to which the source MS and the destination MS are connected) have already authenticated the source MS and the destination MS and thus which has been set as a local routing candidate, the ASN-GW sets the IP flow not as a local routing candidate but as enabled for local routing in the local routing candidate detection procedure.

FIGURE 5 is a flowchart illustrating an operation for detecting a local routing candidate at a CR in the Mobile WiMAX communication system according to an embodiment of the present invention.

Referring to FIGURE 5, the CR continuously monitors whether a new IP flow has been detected. Upon detection of a new IP flow in block 511, the CR checks whether an ASN-GW of an MS using a source IP address (i.e. a source MS) or an ASN-GW of an MS using a destination IP address (i.e. a destination MS) has ever rejected local routing between the source MS and the destination MS during initial network entry of the source MS and the destination MS in block 513. If the ASN-GW of the source MS or the ASN-GW of the destination MS has ever rejected local routing between the source MS and the destination MS, the CR sets the ASN-GW of the source MS or the ASN-GW of the destination MS as unsuitable for local routing in block 515. The ASN-GW of the source MS or the ASN-GW of the destination MS set as unsuitable for local routing is not used for local routing.

Alternatively, if the ASN-GW of the source MS or the ASN-GW of the destination MS has not rejected local routing between the source MS and the destination MS in block 513, the CR determines whether the IP address of the source MS or the IP address of the destination MS matches an IP address of an MS connected to the CR in block 517. If the IP address of the source MS or the IP address of the destination MS does not match the IP address of any MS connected to the CR, the CR proceeds to block 515.

If the IP address of the source MS or the IP address of the destination MS matches the IP address of an MS connected to the CR, the CR sets the ASN-GW of the source MS or the ASN-GW of the destination MS as a local routing candidate in block 519.

Regarding an IP flow which an ASN-GW (the same ASN-GW to which the source MS and the destination MS are connected) or ASN-GWs (different ASN-GWs to which the source MS and the destination MS are connected) have already authenticated the source MS and the destination MS and thus which has been set as a local routing candidate, the CR sets the IP flow not as a local routing candidate but as enabled for local routing in the local routing candidate detection procedure.

Now, a description will be given of a local routing method between MSs connected to the same ASN-GW that is connected to a single CR in the Mobile WiMAX communication system according to an embodiment of the present invention.

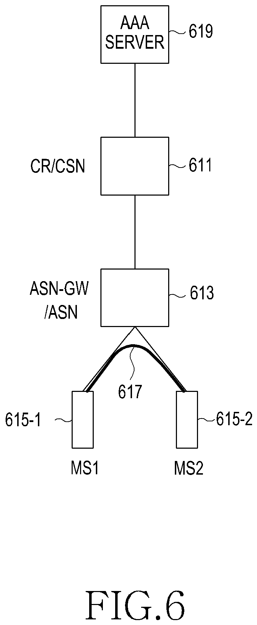

FIGURE 6 illustrates a local routing method between MSs connected to the same ASN-GW that is connected to a single CR in the Mobile WiMAX communication system according to an embodiment of the present invention.

Referring to FIGURE 6, an IP packet is routed from a first MS 615-1 (MS1) to a second MS 615-2 (MS2) in a data path 617 running from MS1 to MS2 through an ASN-GW 613. A CR 611 is connected to an Authorization, Authentication and Accounting (AAA) server 619. The AAA server 619 may be incorporated into the CR 611. Upon detection of a local routing candidate, the CR 611 requests authentication of the detected local routing candidate to the AAA server 619. Then the AAA server 619 performs an authentication process on the local routing candidate.

Compared to local routing in the conventional Mobile WiMAX communication system, an IP packet can be routed from the source MS, MS1 to the destination MS, MS2 without passing through the CR 611 in accordance with the local routing method of the present invention illustrated in FIGURE 6.

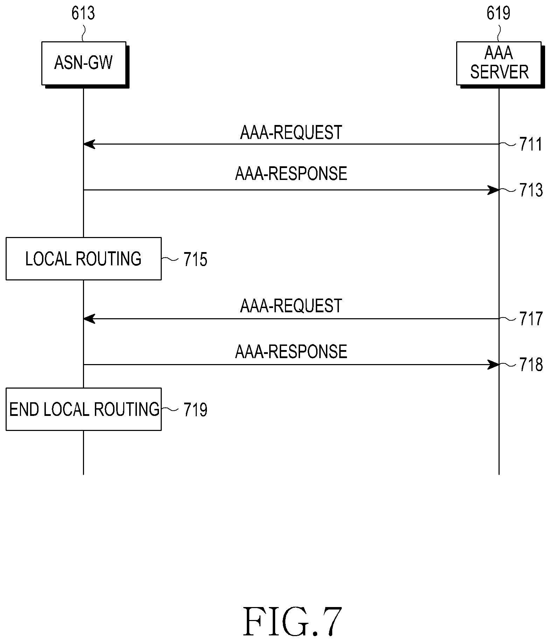

An operation for transmitting and receiving signals between the AAA server 619 and the ASN-GW 613 will be described with reference to FIGURE 7.

FIGURE 7 is a diagram illustrating a signal flow for a signal transmission and reception operation between the AAA server 619 and the ASN-GW 613 illustrated in FIGURE 6.

Before describing FIGURE 7, it is clarified that the AAA server 619 has received a request of an authentication process for local routing from the CR 611, as described with reference to FIGURE 6. Referring to FIGURE 7, if a flow between the two MSs (that is, MS1 and MS2 connected to the same ASN-GW 613) is a local routing candidate, the AAA server 619 transmits an AAA-Request message to the ASN-GW 613 in block 711. The AAA-Request message includes a LR (Local Routing)_Attribute payload. The LR_Attribute payload includes Action, a WiMAX session Identifier (ID) and IP address of MS 1, and a WiMAX session ID and IP address of MS2. The action code of the Action is set to Start indicating the start of local routing, the WiMAX ID and IP address of MS 1 are WiMAX_session1 and IP1, respectively, and the WiMAX ID and IP address of MS 2 are WiMAX_session2 and IP2, respectively.

Upon receipt of the AAA-Request message from the AAA server 619, the ASN-GW 613 replies to the AAA server 619 with an AAA-Response message in block 713. The AAA-Response message includes LR_Attribute. The LR Attribute includes Action with an action code set to 'OK', which implies that an operation corresponding to the action code set in the AAA-Request message will be performed.

After transmitting the AAA-Response message, the ASN-GW 613 performs local routing by forwarding an IP packet between the IP addresses, IP1 and IP2, without forwarding the IP packet to the CR 611 in block 715. Upon receipt of an AAA-Request message with LR_Attribute that includes Action with an action code set to Stop from the AAA server 619 during the local routing in block 717, the ASN-GW 613 replies to the AAA server 619 with an AAA-Response message including LR Attribute including Action with an action code set to 'OK' in block 718 and ends the on-going local routing in block 719. Here, the LR_Attribute including Action with an action code set to 'OK' will be called as "LROK".

In addition to the Action with its action code set to Stop, the AAA-Request message may further include at least one of the WiMAX session ID (i.e., WiMAX_session1) and IP address (i.e., IP1) of MS1 and the WiMAX session ID (i.e., WiMAX_session2) and IP address (i.e., IP2) of MS2.

In various embodiments, for example, when the CR 611 wants to directly monitor the states of MS1 and MS2 and end the IP packet routing between them, the AAA server 619 may transmit an AAA-Request message for ending the local routing to the ASN-GW 613. The situations in which the AAA server 619 determines to end local routing will not be described in detail herein.

It has been described above with reference to FIGURE 7 that when the ASN-GW 613 receives an AAA-Request message including LR_Attribute which has Action with an action code set to Stop, the ASN-GW 613 terminates the local routing. While not shown in FIGURE 7, when at least one of MS1 and MS2 is disconnected from the ASN-GW 613, the local routing may also end.

In FIGURE 7, an AAA protocol such as Remote Authentication Dial-In User Services (RADIUS) may be adopted between the ASN-GW 613 and the AAA server 619. For RADIUS, the AAA-Request message and the AAA-Response message may be configured into a Change-of-Authorization (COA) message and a COA ACKnowledgment/Negative ACKnowledgment (ACK/NACK) message, respectively. While FIGURE 7 has been described in the context of RADIUS as the AAA protocol between the ASN-GW 613 and the AAA server 619, an AAA protocol other than RADIUS may be used between the ASN GW 613 and the AAA server 619.

Each of the AAA server 619 and the ASN-GW 613 illustrated in FIGURE 6 includes a control unit, a transmission unit, and a reception unit. The control unit of the AAA server 619 controls the transmission unit and the reception unit so as to perform the signal transmission and reception operation illustrated in FIGURE 7. The control unit of the ASN-GW 613 controls the transmission unit and the reception unit so as to perform the signal transmission and reception operation illustrated in FIGURE 7. The control unit, the transmission unit, and the reception unit of the AAA server 619 may be incorporated into a single unit, and the control unit, the transmission unit, and the reception unit of the ASN-GW 613 may also be incorporated into a single unit. The configurations of the AAA server 619 and the ASN-GW 613 will further be described later in great detail.

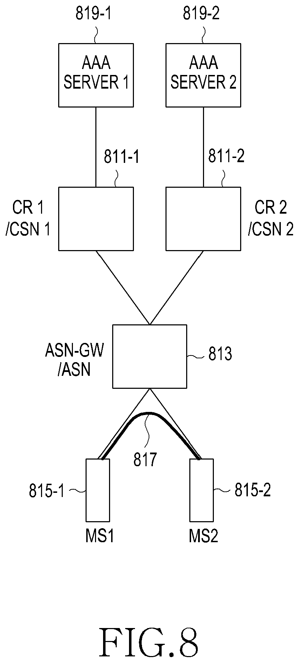

With reference to FIGURE 8, a description will be given of a local routing method between MSs connected to the same ASN-GW that is connected to different CRs in the Mobile WiMAX communication system according to another embodiment of the present invention.

FIGURE 8 illustrates a local routing method between MSs connected to the same ASN-GW that is connected to different CRs in the Mobile WiMAX communication system according to another embodiment of the present invention.

Referring to FIGURE 8, an IP packet is routed from a first MS 815-1 (MS1) to a second MS 815-2 (MS2) in a data path 817 running from MS1 to MS2 through an ASN-GW 813. A first CR 811-1 (CR1) is connected to a first AAA server 819-1 (AAA server 1) and a second CR 811-2 (CR2) is connected to a second AAA server 819-2 (AAA server 2). AAA server 1 may be incorporated into CR1 and AAA server 2 may be incorporated into CR2.

Upon detection of a local routing candidate, CR1 requests authentication of the detected local routing candidate to AAA server 1. Then AAA server 1 performs an authentication process on the local routing candidate. In addition, upon detection of a local routing candidate, CR2 requests authentication of the detected local routing candidate to AAA server 2. Then AAA server 2 performs an authentication process on the local routing candidate.

Compared to local routing in the conventional Mobile WiMAX communication system, an IP packet can be routed from the source MS, MS1 to the destination MS, MS2 without passing through CR1 and CR2 in accordance with the local routing method of the present invention illustrated in FIGURE 8.

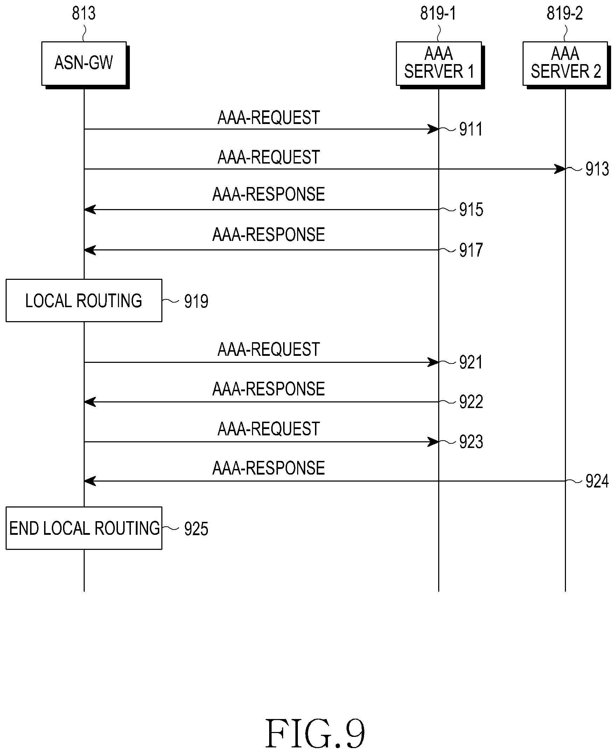

An operation for transmitting and receiving signals among AAA server 1, AAA server 2, and the ASN-GW 813 will be described with reference to FIGURE 9.

FIGURE 9 is a diagram illustrating a signal flow for a signal transmission and reception operation among AAA server 1, AAA server 2, and the ASN-GW 813 illustrated in FIGURE 8.

Referring to FIGURE 9, if a flow between the two MSs (that is, MS1 and MS2 connected to the ASN-GW 813) is a local routing candidate, the ASN-GW 813 transmits AAA-Request messages to AAA server 1 connected to MS1 and AAA server 2 connected to MS2, respectively in blocks 911 and 913. The AAA-Request message transmitted to AAA server 1 includes LR _Attribute having Action with an action code set to Start, a WiMAX session ID (e.g., WiMAX_session1) and IP address (e.g., IP1) of MS1, and an IP address (e.g., IP2) of MS2. The AAA-Request message transmitted to AAA server 2 includes LR_Attribute having Action with an action code set to Start, a WiMAX session ID (e.g., WiMAX_session2) of MS2, the IP address IP2 of MS2, and the IP address IP1 of MS1.

Upon receipt of the AAA-Request message from the ASN-GW 813, AAA server 1 replies to the ASN-GW 813 with an AAA-Response message in block 915. The AAA-Response message includes LR_Attribute having Action with an action code set to 'OK'. Upon receipt of the AAA-Request message from the ASN-GW 813, AAA server 2 replies to the ASN-GW 813 with an AAA-Response message in block 917. The AAA-Response message includes LR _Attribute having Action with an action code set to 'OK'.

After receiving the AAA-Response message, the ASN-GW 813 performs local routing by forwarding an IP packet between the IP addresses IP1 and IP2 without forwarding the IP packet to CR1 and CR2 in block 919. During the local routing, the ASN-GW 813 transmits AAA-Request messages with LR _Attribute that includes Action with an action code set to Stop to at least one of AAA server 1 and AAA server 2 in blocks 921 and 923. Upon receipt of an AAA-Response message including LROK from the at least one of AAA server 1 and AAA server 2 in blocks 922 and 924, the ASN-GW 813 ends the on-going local routing in block 925.

In addition to the Action with its action code set to Stop, the AAA-Request message transmitted to AAA server 1 may further include at least one of the WiMAX session ID (i.e., WiMAX_session1) and IP address (i.e., IP1) of MS1 and the IP address (i.e., IP2) of MS2. The AAA-Request message transmitted AAA server 2 may include at least one of the WiMAX session ID (i.e., WiMAX_session2) and IP address (i.e., IP2) of MS2 and the IP address (i.e., IP1) of MS1 as well as the Action with its action code set to Stop.

In various embodiments, for example, when CR1 811-1 and CR2 811-2 want to directly monitor the states of MS1 815-1 and MS2 815-2 and end the IP packet routing between them, AAA server 1 819-1 and AAA server 2 819-2 may transmit AAA-Request messages for ending the local routing to the ASN-GW 813. The situations in which AAA server 1 819-1 and AAA server 2 819-2 determine to end local routing will not be described in detail herein.

It has been described above with reference to FIGURE 9 that when the ASN-GW 813 receives from at least one of AAA server 1 and AAA server 2 an AAA-Request message including LR_Attribute which has Action with an action code set to Stop, the local routing is terminated. While not shown in FIGURE 9, when at least one of MS1 and MS2 is disconnected from the ASN-GW 813, the local routing may also end.

In FIGURE 9, an AAA protocol such as RADIUS may be adopted between the ASN-GW 813 and AAA server 1 and between the ASN-GW 813 and AAA server 2. For RADIUS, the AAA-Request message and the AAA-Response message may be configured into an Access Request message and an Access-Accept/Reject message, respectively. While FIGURE 9 has been described in the context of RADIUS as the AAA protocol between the ASN-GW 813 and AAA server 1 and between the ASN-GW 813 and AAA server 2, any other AAA protocol may substitute for RADIUS.

Each of AAA server 1, AAA server 2, and the ASN-GW 813 illustrated in FIGURE 8 includes a control unit, a transmission unit, and a reception unit. The control unit of AAA server 1 controls the transmission unit and the reception unit so as to perform the signal transmission and reception operation illustrated in FIGURE 9. The control unit of AAA server 2 controls the transmission unit and the reception unit so as to perform the signal transmission and reception operation illustrated in FIGURE 9. The control unit of the ASN-GW 813 controls the transmission unit and the reception unit so as to perform the signal transmission and reception operation illustrated in FIGURE 7. The control unit, the transmission unit, and the reception unit of AAA server 1 may be incorporated into a single unit, and the control unit, the transmission unit, and the reception unit of AAA server 2 may also be incorporated into a single unit. The control unit, the transmission unit, and the reception unit of the ASN-GW 813 may be incorporated into a single unit. The configurations of AAA server 1, AAA server 2, and the ASN-GW 813 will further be described later in great detail.

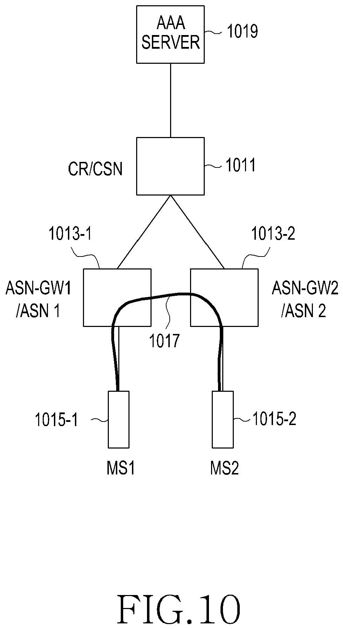

FIGURE 10 illustrates a local routing method between MSs connected to different ASN-GWs that are connected to the same CR in a Mobile WiMAX communication system according to a further embodiment of the present invention.

Referring to FIGURE 10, an IP packet is routed from a first MS 1015-1 (MS1) to a second MS 1015-2 (MS2) in a data path 1017 running from MS1 to MS2 through a first ASN-GW 1013-1 (ASN-GW1) and a second ASN-GW 1013-2 (ASN-GW2). A CR 1011 is connected to an AAA server 1019. The AAA server 1019 may be incorporated into the CR 1011. Upon detection of a local routing candidate, the CR 1011 requests authentication of the detected local routing candidate to the AAA server 1019. Then the AAA server 1019 performs an authentication process on the local routing candidate.

In accordance with the local routing method of the present invention illustrated in FIGURE 10, an IP packet can be routed from a source MS, MS1, to a destination MS, MS2, without passing through the CR 1011, compared to local routing in a conventional Mobile WiMAX communication system.

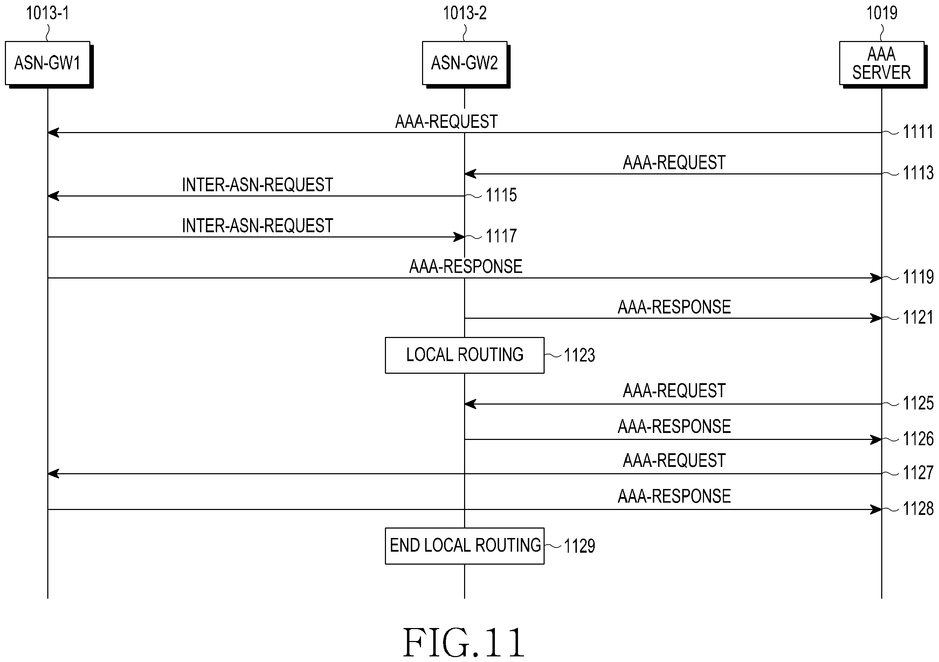

An operation for transmitting and receiving signals among the AAA server 1019, ASN-GW1, and ASN-GW2 without a crypto protection process will be described with reference to FIGURE 11.

FIGURE 11 is a diagram illustrating a signal flow for a signal transmission and reception operation among the AAA server 1019, ASN-GW1, and ASN-GW2 illustrated in FIGURE 10, without a crypto protection process.

Before describing FIGURE 11, it is clarified that the AAA server 1019 has received a request of an authentication process for local routing from the CR 1011, as described with reference to FIGURE 10. Referring to FIGURE 11, if a flow between the two MSs (MS1 connected to ASN-GW1 and MS2 connected to ASN-GW2) is a local routing candidate, the AAA server 1019 transmits an AAA-Request message to ASN-GW1 and ASN-GW2 in blocks 1111 and 1113.

The AAA-Request message transmitted to ASN-GW1 includes LR_Attribute having Action with an action code set to Start, a WiMAX session ID (e.g., WiMAX_session1) and IP address (e.g., IP1) of MS1, an IP address (e.g., IP2) of MS2, an IP address (e.g., IP_ASN2) of ASN-GW2. The AAA-Request message transmitted to ASN-GW2 includes LR_Attribute having Action with an action code set to Start, a WiMAX session ID (e.g., WiMAX_session2) and IP2 of MS2, IP1, an IP address (e.g., IP_ASN1) of ASN-GW1, and master_flag indicating that ASN-GW2 will be responsible for local routing. The reason for including IP_ASN2 in the AAA-Request message transmitted to ASN-GW1 is to enable for ASN-GW1 to forward an IP packet related to the local routing to ASN-GW2. Similarly, to enable ASN-GW2 to forward an IP packet related to the local routing to ASN-GW1, IP_ASN1 is included in the AAA-Request message transmitted to ASN-GW2.

Upon receipt of the AAA-Request message including master_flag, ASN-GW2 is aware that it should perform the local routing and transmits an Inter-ASN-Request message including LR REQ (Local Routing REQuest) that has Action with an action code set to Start, IP1, and IP2 to ASN-GW1 in block 1115.

ASN-GW1 transmits to ASN-GW2 an Inter-ASN-Response message in response to the Inter-ASN-Request message in block 1117. The Inter-ASN-Response message includes LR RSP (Local Routing ReSPonse) having Action with an action code set to 'OK'.

ASN-GW1 transmits an AAA-Response message including LR_Attribute having Action with an action code set to 'OK' to the AAA server 1019 in block 1119. In block 1121, ASN-GW2 transmits an AAA-Response message including LR _Attribute having Action with an action code set to 'OK' to the AAA server 1019.

After transmitting the AAA-Response message, ASN-GW2 performs local routing by forwarding an IP packet between the IP addresses IP1 and IP2 without forwarding the IP packet to the CR 1011 in block 1123. Upon receipt of an AAA-Request message including LR _Attribute that has Action with an action code set to Stop from the AAA server 1019 during the local routing in block 1125, ASN-GW2 transmits an AAA-Response message including LROK to the AAA server 1019 in response to the AAA-Request message in block 1126 and ends the on-going local routing in block 1129. In addition to the Action with an action code set to Stop, the AAA-Request message received from the AAA server 1019 may further include at least one of WiMAX_session2, IP2, IP1, IP_ASN1, and master_flag.

The AAA server 1019 also transmits to ASN-GW1 an AAA-Request message including LR _Attribute that has Action with an action code set to Stop, WiMAX_session1, IP1, IP2, and IP_ASN2 in block 1127 and receives from ASN-GW1 an AAA-Response message including LROK in response to the AAA-Request message in block 1128.

In various embodiments, for example, when the CR 1011 wants to directly monitor the states of MS1 and MS2 and end the IP packet routing between them, the AAA server 1019 may transmit an AAA-Request message for ending the local routing. The situations in which the AAA server 1019 determines to end local routing will not be described in detail herein.

It has been described above with reference to FIGURE 11 that when ASN-GW2 receives an AAA-Request message including LR_Attribute which has Action with an action code set to Stop from the AAA server 1019, ASN-GW2 ends the local routing. The local routing may also end when MS1 is disconnected from ASN-GW1 or MS2 is disconnected from ASN-GW2, while not shown in FIGURE 11.

In FIGURE 11, an AAA protocol such as RADIUS may be adopted between ASN-GW1 and the AAA server 1019 and between ASN-GW2 and the AAA server 1019. For RADIUS, the AAA-Request message and the AAA-Response message may be configured into a COA message and a COA ACK/NACK message, respectively. An AAA protocol other than RADIUS may be used among ASN GW1, ASN GW2, and the AAA server 1019.

The Inter-ASN-Request message and Inter-ASN-Response message exchanged between ASN-GW1 and ASN-GW2 may be, for example, R4 messages.

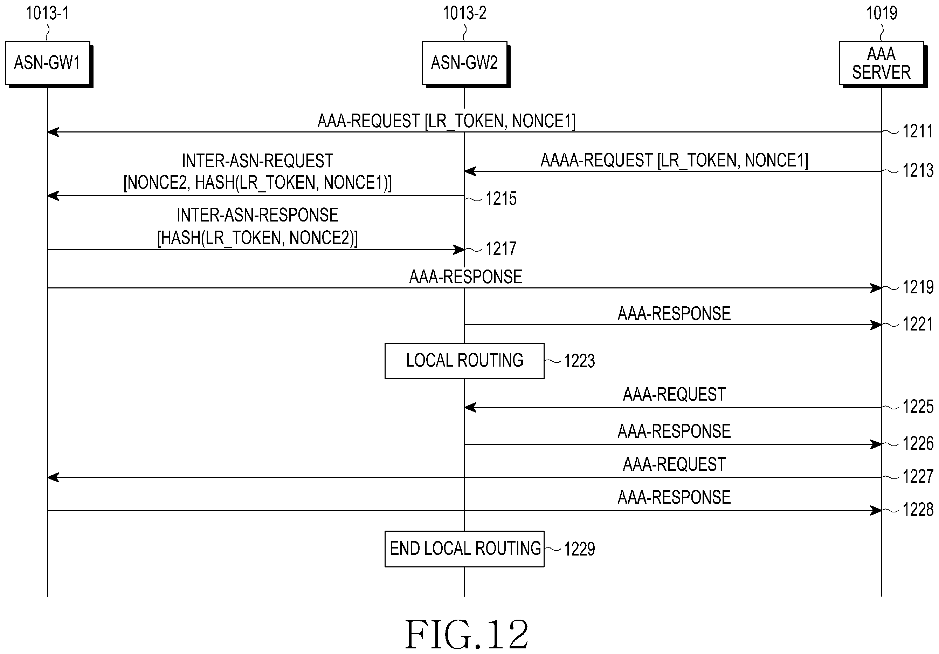

The signal transmission and reception operation among the AAA server 1019, ASN-GW1, and ASN-GW2, without a crypto protection process has been described above with reference to FIGURE 11. Alternatively, a signal transmission and reception operation may be performed along with a crypto protection process among the AAA server 1019, ASN-GW1, and ASN-GW2. The signal transmission and reception operation among the AAA server 1019, ASN-GW1, and ASN-GW2 will be described below with reference to FIGURE 12.

FIGURE 12 is a diagram illustrating a signal flow for a signal transmission and reception operation along with a crypto protection process among the AAA server 1019, ASN-GW1, and ASN-GW2.

Referring to FIGURE 12, blocks 1211 to 1229 are performed in the same manner as blocks 1111 to 1129 of FIGURE 11, except for the crypto protection process. That is, because signal transmission and reception are carried out without a crypto protection process among the AAA server 1019, ASN-GW1, and ASN-GW2 in FIGURE 11, the procedure of FIGURE 11 is different from that of FIGURE 12 in terms of a crypto protection process. The differences between the procedures of FIGURES 11 and 12 will be described as follows.

First, each of AAA-Request messages transmitted in blocks 1211 and 1213 further includes LR_TOKEN and nonce 1, compared to the AAA-Request messages of blocks 1111 and 1113 in FIGURE 11. LR TOKEN is a secret value randomly selected by the AAA server 1019. Nonce 1 is also randomly selected by the AAA server 1019. Notably, nonce 1 is not a secret value.

Second, compared to the Inter-ASN-Request message of block 1115 in FIGURE 11, an Inter-ASN-Request message transmitted in block 1215 further includes nonce 2 and a hash(LR_TOKEN, nonce 1). Nonce 2 is a value randomly selected by ASN-GW2 and the hash(LR_TOKEN, nonce 1) is a value generated by applying a hash function to LR_TOKEN and nonce 1. Nonce 2 is not a secret value. It is assumed that the hash function is already known to both ASN-GW1 and ASN-GW2.

Because ASN-GW1 knows nonce 1 set in the AAA-Request message and the hash function, it can generate the hash(LR_TOKEN, nonce 1). Therefore, when the generated hash(LR_TOKEN, nonce 1) is identical to the hash(LR_TOKEN, nonce 1) included in the Inter-ASN-Request message, the subsequent process is performed. In other words, if the generated hash(LR_TOKEN, nonce 1) is different from the hash(LR_TOKEN, nonce 1) included in the Inter-ASN-Request message, this means that ASN-GW1 or ASN-GW2 is not a normal ASN-GW and thus the operation is not performed any further.

Third, an Inter-ASN-Response message transmitted in block 1217 further includes a hash(LR_TOKEN, nonce 2), compared to the Inter-ASN-Response message transmitted in block 1117 of FIGURE 11. The hash(LR_TOKEN, nonce 2) is a value generated by applying a hash function to LR_TOKEN and nonce 2.

Because ASN-GW2 knows nonce 1 set in the AAA-Request message and the hash function, it can generate the hash(LR_TOKEN, nonce 2). Therefore, only when the generated hash(LR_TOKEN, nonce 2) is identical to the hash(LR_TOKEN, nonce 2) included in the Inter-ASN-Response message, the subsequent process is performed. In other words, if the generated hash(LR_TOKEN, nonce 2) is different from the hash(LR_TOKEN, nonce 2) included in the Inter-ASN-Response message, this means that ASN-GW2 or ASN-GW1 is not a normal ASN-GW and thus the operation is not performed any further.

While not shown, each of the AAA server 1019, ASN-GW1, and ASN-GW2 illustrated in FIGURE 10 includes a control unit, a transmission unit, and a reception unit. The control unit of the AAA server 1019 controls the transmission unit and the reception unit so as to perform the signal transmission and operations illustrated in FIGURES 11 and 12. The control unit of ASN-GW1 controls the transmission unit and the reception unit so as to perform the signal transmission and operations illustrated in FIGURES 11 and 12. The control unit of ASN-GW2 controls the transmission unit and the reception unit so as to perform the signal transmission and operations illustrated in FIGURES 11 and 12. The control unit, the transmission unit, and the reception unit of the AAA server 1019 may be incorporated into a single unit. The control unit, the transmission unit, and the reception unit of each of ASN-GW1 and ASN-GW2 may also be incorporated into a single unit.

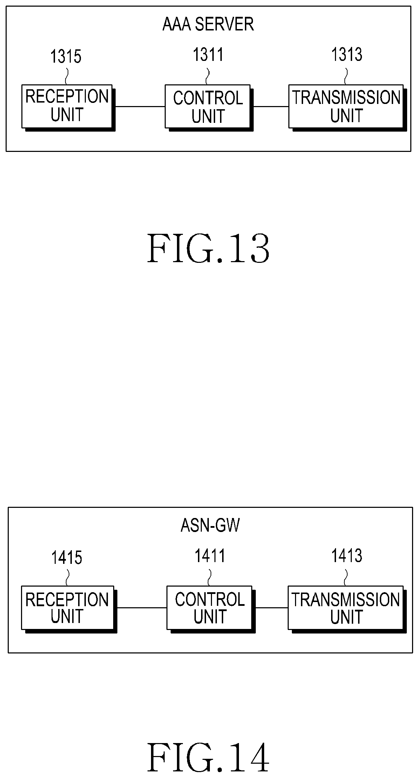

FIGURE 13 is a block diagram of an AAA server in a Mobile WiMAX communication system according to an embodiment of the present invention.

Referring to FIGURE 13, the AAA server includes a control unit 1311, a transmission unit 1313, and a reception unit 1315. The interior structure of the AAA server illustrated in FIGURE 13 corresponds to the interior structures of the AAA server 619 of FIGURE 6, AAA server 1 and AAA server 2 of FIGURE 8, and the AAA server 1019 of FIGURE 10.

The control unit 1311 provides overall control of the AAA server so that the AAA server may operate according to a local routing method according to an embodiment of the present invention. The local routing method performed by the AAA server has been described before and thus its detailed description will not be provided herein. In addition, the control unit 1311 may include a memory unit for storing data and messages. Alternatively or additionally, a memory unit may be separately configured.

The transmission unit 1313 transmits data and messages for the AAA server to operate according to the local routing method, under the control of the control unit 1311. The data and messages transmitted by the transmission unit 1313 have been described before and thus their detailed description will not be provided herein.

The reception unit 1315 receives data and messages for the AAA server to operate according to the local routing method, under the control of the control unit 1311. The data and messages transmitted by the reception unit 1315 have been described before and thus their detailed description will not be provided herein.

While the control unit 1311, the transmission unit 1313, and the reception unit 1315 are shown in FIGURE 13 as separately configured, they may be incorporated into a single unit.

FIGURE 14 is a block diagram of an ASN-GW in the Mobile WiMAX communication system according to an embodiment of the present invention.

Referring to FIGURE 14, the ASN-GW includes a control unit 1411, a transmission unit 1413, and a reception unit 1415. The interior structure of the ASN-GW illustrated in FIGURE 13 corresponds to the interior structures of the ASN-GW 613 of FIGURE 6, the ASN-GW 813 of FIGURE 8, and ASN-GW 1 and ASN-GW2 of FIGURE 10.

The control unit 1411 provides overall control of the ASN-GW so that the ASN-GW may operate according to a local routing method according to an embodiment of the present invention. The local routing method performed by the ASN-GW has been described before and thus its detailed description will not be provided herein. In addition, the control unit 1411 may include a memory unit for storing data and messages. Alternatively or additionally, a memory unit may be separately configured.

The transmission unit 1413 transmits data and messages for the ASN-GW to operate according to the local routing method, under the control of the control unit 1411. The data and messages transmitted by the transmission unit 1413 have been described before and thus their detailed description will not be provided herein.

The reception unit 1415 receives data and messages for the ASN-GW to operate according to the local routing method, under the control of the control unit 1411. The data and messages transmitted by the reception unit 1415 have been described before and thus their detailed description will not be provided herein.

While the control unit 1411, the transmission unit 1413, and the reception unit 1415 are shown in FIGURE 14 as separately configured, they may be incorporated into a single unit.

As is apparent from the above description, because an IP packet is routed through a data path that minimizes the number of entities involved in the IP packet routing according to the present invention, the time used for the IP packet routing is minimized.

Furthermore, minimum resources are used for the IP packet routing and thus the overall resource efficiency of a system is increased.

Although the present disclosure has been described with an exemplary embodiment, various changes and modifications may be suggested to one skilled in the art. It is intended that the present disclosure encompass such changes and modifications as fall within the scope of the appended claims.

## Claims

1. A local routing method of an access serving network gateway, ASN-GW, (613, 813, 1013-1, 1013-2) in a mobile communication system, the method comprising:
receiving an authorization, authentication and accounting, AAA, request message (711, 1111, 1211) including information indicating a start of local routing from an AAA server (619, 819-1, 819-2, 1019), if a flow between a first mobile station, MS, (615-1, 815-1, 1015-1) and a second MS (615-2, 815-2, 1015-2) is a local routing candidate;
performing the local routing (715, 919, 1123, 1223) between the first MS and the second MS after transmitting to the AAA server an AAA response message (713, 1119, 1121, 1221) including information indicating that the local routing will start in response to the AAA request message,
determining whether the local routing (715, 919, 1123, 1223) is to be terminated during the local routing between the first MS and the second MS; and
ending the local routing (719, 925, 1129, 1229), if it is determined that the local routing is to be terminated during the local routing between the first MS and the second MS,
wherein the local routing is based on consent among entities involved in the local routing, and
wherein the determination comprises determining to end the local routing, when at least one of the first MS and the second MS is disconnected from the ASN-GW or an AAA request message (717, 1125, 1127, 1225, 1227) including information indicating a stop of the local routing is received from the AAA server.

2. A local routing method of an authorization, authentication and accounting, AAA, server (619, 819-1, 819-2, 1019)in a mobile communication system, the method comprising:
transmitting an AAA request message (711, 1111, 1211) including information indicating a start of local routing to an access serving network gateway, ASN-GW, if a flow between a first mobile station, MS, (615-1, 815-1, 1015-1) and a second MS (615-2, 815-2, 1015-2) is a local routing candidate; and
receiving from the ASN-GW (613, 813, 1013-1, 1013-2) an AAA response message (713, 1119, 1121, 1221) including information indicating that the local routing will start in response to the AAA request message,
transmitting an AAA request message (717, 1125, 1127, 1225, 1227) including information indicating a stop of the local routing to the ASN-GW.

3. A local routing method of an access serving network gateway, ASN-GW, in a mobile communication system, the method comprising:
transmitting an authorization, authentication and accounting, AAA, request message (911, 913) including information indicating a start of local routing to a first AAA server (819-1) and a second AAA server (819-2), if a flow between a first mobile station, MS, (615-1, 815-1, 1015-1) and a second MS (615-2, 815-2, 1015-2) is a local routing candidate;
receiving from the first AAA server an AAA response message (915) including first information indicating that the local routing will start in response to the AAA request message;
receiving from the second AAA server an AAA response message (917) including the first information;
performing the local routing (919) between the first MS and the second MS,
determining whether the local routing (715, 919, 1123, 1223) is to be terminated during the local routing between the first MS and the second MS; and
ending the local routing (719, 925, 1129, 1229), if it is determined that the local routing is to be terminated during the local routing between the first MS and the second MS,
wherein the local routing is based on consent among entities involved in the local routing, and
wherein the determination comprises determining to end the local routing, when at least one of the first MS and the second MS is disconnected from the ASN-GW or upon receipt of an AAA response message (922, 924) in response to an AAA request message (921, 923) including information indicating a stop of the local routing is received from at least one of the first AAA server (819-1) and the second AAA server (819-2).

4. A local routing method of an authorization, authentication and accounting, AAA, server (619, 819-1, 819-2, 1019) in a mobile communication system, the method comprising:
receiving an AAA request message (911, 913)including information indicating start of local routing from an access serving network gateway, ASN-GW, (813) if a flow between a first mobile station, MS, (615-1, 815-1, 1015-1) and a second MS (615-2, 815-2, 1015-2) is a local routing candidate;
transmitting to the ASN-GW an AAA response message (915, 917) including information indicating that the local routing will start in response to the AAA request message; and
transmitting an AAA response message (922, 924) indicating a stop of the local routing to the ASN-GW,
wherein the local routing (919) is based on consent among entities involved in the local routing.

5. A local routing method of an access serving network gateway, ASN-GW, (1013-2) in a mobile communication system, the method comprising:
receiving from an authorization, authentication and accounting, AAA, server (1019) an AAA request message (1213) including first information and second information, the first information indicating a start of local routing and the second information indicating that the ASN-GW (1013-2) will take charge of the local routing, if a flow between a first mobile station, MS, and a second MS is a local routing candidate;
transmitting an inter-ASN request message (1215) including the first information to a second ASN-GW (1013-1) other than the ASN-GW (1013-2);
receiving from the second ASN-GW an inter-ASN response message (1217) including third information indicating the start of the local routing in response to the inter-ASN request message;
transmitting an AAA response message (1221) including the third information to the AAA server;
performing the local routing (1223) between the first MS and the second MS after transmitting the AAA response message to the AAA server;
determining whether the local routing is to be terminated during the local routing between the first MS and the second MS; and
ending the local routing, if it is determined that the local routing is to be terminated during the local routing between the first MS and the second MS,
wherein the local routing is based on consent among entities involved in the local routing, and
wherein the determination comprises determining to end the local routing, when the first MS is disconnected from the second ASN-GW (1013-1), the second MS is disconnected from the second ASN-GW (1013-1), or an AAA request message (1225) including information indicating a stop of the local routing is received from the AAA server (1019).

6. A local routing method of a first access serving network gateway, ASN-GW, (1013-1) in a mobile communication system, the method comprising:
receiving from an authorization, authentication and accounting, AAA, server (1019) an AAA request message (1211) including first information indicating a start of local routing, if a flow between a first mobile station, MS, and a second MS is a local routing candidate;
receiving an inter-ASN request message (1215) including the first information from a second ASN-GW (1013-2) other than the first ASN-GW (1013-1);
transmitting to the second ASN-GW (1013-2) an inter-ASN response message (1217) including second information indicating the start of the local routing in response to the inter-ASN request message; and
transmitting an AAA response message (1219) including the second information to the AAA server,
receiving an AAA request message (1227) including information indicating a stop of the local routing,
wherein the local routing is based on consent among entities involved in the local routing.

7. A local routing method of an authorization, authentication and accounting, AAA, server (1019) in a mobile communication system, the method comprising:
transmitting an AAA request message (1211) including first information indicating a start of local routing to a first access serving network gateway, ASN-GW, (1013-1), if a flow between a first mobile station, MS, and a second MS is a local routing candidate;
transmitting to a second ASN-GW (1013-2) an AAA request message including the first information and second information indicating that the second ASN-GW will take charge of the local routing; and
receiving from each of the first ASN-GW (1013-1) and the second ASN-GW (1013-2) an AAA response message (1219, 1221) including third information indicating that the local routing (1223) will start, and
transmitting an AAA request message (1225) including information indicating a stop of the local routing to the second ASN-GW (1013-2).

8. An access serving network gateway, ASN-GW (613, 813, 1013-1, 1013-2) adapted to perform the method of one of claims 1, 3, 5 and 6.

9. An authorization, authentication and accounting, AAA, server (619, 819-1, 819-2, 1019) adapted to perform the method of one of claims 2, 4 and 7.

## Patentansprüche

1. Lokales Routingverfahren eines zugangsbedienenden Netzwerk-Gateways, ASN-GW, (613, 813, 1013-1, 1013-2) in einem mobilen Kommunikationssystem, das Verfahren umfassend:
Empfangen einer Autorisierungs-, Authentifizierungs- und Verrechnungs-, AAA, Anfragenachricht (711, 1111, 1211), enthaltend Informationen, die einen Beginn eines lokalen Routings angeben, von einem AAA-Server (619, 819-1, 819-2, 1019), falls ein Strom zwischen einer ersten mobilen Station, MS, (615-1,815-1, 1015-1) und einer zweiten MS (615-2, 815-2, 1015-2) ein lokaler Routing-Kandidat ist;
Durchführen des lokalen Routings (715, 919, 1123, 1223) zwischen der ersten MS und der zweiten MS nach Senden einer AAA-Antwortnachricht (713, 1119, 1121, 1221) an den AAA-Server, enthaltend Informationen, die angeben, dass das lokale Routing in Antwort auf die AAA-Anfragenachricht starten wird,
Bestimmen, ob das lokale Routing (715, 919, 1123, 1223) während des lokalen Routings zwischen der ersten MS und der zweiten MS zu beenden ist; und
Beenden des lokalen Routings (719, 925, 1129, 1229), falls bestimmt wird, dass das lokale Routing während des lokalen Routings zwischen der ersten MS und der zweiten MS zu beenden ist,
wobei das lokale Routing auf einer Übereinstimmung unter Instanzen beruht, die am lokalen Routing beteiligt sind, und
wobei die Bestimmung ein Bestimmen umfasst, das lokale Routing zu beenden, wenn zumindest eine von der ersten MS und der zweiten MS vom ASN-GW getrennt wird oder eine AAA-Anfragenachricht (717, 1125, 1127, 1225, 1227) enthaltend Informationen, die einen Stopp des lokalen Routings angeben, vom AAA-Server empfangen wird.

2. Lokales Routingverfahren eines Autorisierungs-, Authentifizierungs- und Verrechnungs-, AAA, Servers (619, 819-1, 819-2, 1019) in einem mobilen Kommunikationssystem, das Verfahren umfassend:
Senden einer AAA-Anfragenachricht (711, 1111, 1211), enthaltend Informationen, die einen Beginn eines lokalen Routings angeben, an ein zugangsbedienendes Netzwerk-Gateway, ASN-GW, falls ein Strom zwischen einer ersten mobilen Station, MS, (615-1, 815-1, 1015-1) und einer zweiten MS (615-2, 815-2, 1015-2) ein lokaler Routing-Kandidat ist; und
Empfangen vom ASN-GW (613, 813, 1013-1, 1013-2) einer AAA-Antwortnachricht (713, 1119, 1121, 1221), enthaltend Informationen, die angeben, dass das lokale Routing in Antwort auf die AAA-Anfragenachricht beginnen wird,
Senden einer AAA-Anfragenachricht (717, 1125, 1127, 1225, 1227), enthaltend Informationen, die einen Stopp des lokalen Routings angeben, an das ASN-GW.

3. Lokales Routingverfahren eines zugangsbedienenden Netzwerk-Gateways, ASN-GW, in einem mobilen Kommunikationssystem, das Verfahren umfassend:
Senden einer Autorisierungs-, Authentifizierungs- und Verrechnungs-, AAA, Anfragenachricht (911, 913), enthaltend Informationen, die einen Beginn eines lokalen Routings angeben, an einen ersten AAA-Server (819-1) und einen zweiten AAA-Server (819-2), falls ein Strom zwischen einer ersten mobilen Station, MS, (615-1,815-1, 1015-1) und einer zweiten MS (615-2, 815-2, 1015-2) ein lokaler Routing-Kandidat ist;
Empfangen vom ersten AAA-Server einer AAA-Antwortnachricht (915), enthaltend erste Informationen, die angeben, dass das lokale Routing in Antwort auf die AAA-Anfragenachricht beginnen wird;
Empfangen vom zweiten AAA-Server einer AAA-Antwortnachricht (917), enthaltend die ersten Informationen;
Durchführen des lokalen Routings (919) zwischen der ersten MS und der zweiten MS,
Bestimmen, ob das lokale Routing (715, 919, 1123, 1223) während des lokalen Routings zwischen der ersten MS und der zweiten MS zu beenden ist; und
Beenden des lokalen Routings (719, 925, 1129, 1229), falls bestimmt wird, dass das lokale Routing während des lokalen Routings zwischen der ersten MS und der zweiten MS zu beenden ist,
wobei das lokale Routing auf einer Übereinstimmung unter Instanzen beruht, die am lokalen Routing beteiligt sind, und
wobei die Bestimmung ein Bestimmen umfasst, das lokale Routing zu beenden, wenn zumindest eine der ersten MS und der zweiten MS vom ASN-GW getrennt wird, oder nach Empfang einer AAA-Antwortnachricht (922, 924) in Antwort auf eine AAA-Anfragenachricht (921, 923), die Informationen enthält, die einen Stopp des lokalen Routings angeben, die von zumindest einem des ersten AAA-Servers (819-1) und des zweiten AAA-Servers (819-2) empfangen wird.

4. Lokales Routingverfahren eines Autorisierungs-, Authentifizierungs- und Verrechnungs-, AAA, Servers (619, 819-1, 819-2, 1019) in einem mobilen Kommunikationssystem, das Verfahren umfassend:
Empfangen einer AAA-Anfragenachricht (911, 913), enthaltend Informationen, die einen Beginn eines lokalen Routings angeben, von einem zugangsbedienenden Netzwerk-Gateway, ASN-GW, (813), falls ein Strom zwischen einer ersten mobilen Station, MS, (615-1, 815-1, 1015-1) und einer zweiten MS (615-2, 815-2, 1015-2) ein lokaler Routing-Kandidat ist;
Senden an das ASN-GW einer AAA-Antwortnachricht (915, 917) enthaltend Informationen, die angeben, dass das lokale Routing in Antwort auf die AAA-Anfragenachricht beginnen wird; und
Senden einer AAA-Antwortnachricht (922, 924), die einen Stopp des lokalen Routing angibt, an das ASN-GW,
wobei das lokale Routing (919) auf einer Übereinstimmung unter Instanzen beruht, die am lokalen Routing beteiligt sind.

5. Lokales Routingverfahren eines zugangsbedienenden Netzwerk-Gateways, ASN-GW, (1013-2) in einem mobilen Kommunikationssystem, das Verfahren umfassend:
Empfangen von einem Autorisierungs-, Authentifizierungs- und Verrechnungs-, AAA, Server (1019) einer AAA-Anfragenachricht (1213), enthaltend erste Informationen und zweite Informationen, wobei die ersten Informationen einen Beginn eines lokalen Routings angeben und die zweiten Informationen angeben, dass das ASN-GW (1013-2) das lokale Routing übernehmen wird, falls ein Strom zwischen einer ersten mobilen Station, MS, und einer zweiten MS ein lokaler Routing-Kandidat ist;
Senden einer Inter-ASN-Anfragenachricht (1215), die die ersten Informationen enthält, an ein zweites ASN-GW (1013-1), das nicht das ASN-GW (1013-2) ist;
Empfangen vom zweiten ASN-GW einer Inter-ASN-Antwortnachricht (1217), die dritte Informationen enthält, die den Beginn des lokalen Routings angeben, in Antwort auf die Inter-ASN-Anfragenachricht;
Senden einer AAA-Antwortnachricht (1221), die die dritten Informationen enthält, an den AAA-Server;
Durchführen des lokalen Routings (1223) zwischen der ersten MS und der zweiten MS nach Senden der AAA-Antwortnachricht an den AAA-Server;
Bestimmen, ob das lokale Routing während des lokalen Routings zwischen der ersten MS und der zweiten MS zu beenden ist; und
Beenden des lokalen Routings, falls bestimmt wird, dass das lokale Routing während des lokalen Routings zwischen der ersten MS und der zweiten MS zu beenden ist,
wobei das lokale Routing auf einer Übereinstimmung unter Instanzen beruht, die am lokalen Routing beteiligt sind, und
wobei die Bestimmung ein Bestimmen umfasst, das lokale Routing zu beenden, wenn die erste MS vom zweiten ASN-GW (1013-1) getrennt wird, die zweite MS vom zweiten ASN-GW (1013-1) getrennt wird oder eine AAA-Anfragenachricht (1225), enthaltend Informationen, die einen Stopp des lokalen Routings angeben, vom AAA-Server (1019) empfangen wird.

6. Lokales Routingverfahren eines ersten zugangsbedienenden Netzwerk-Gateways, ASN-GW, (1013-1) in einem mobilen Kommunikationssystem, das Verfahren umfassend:
Empfangen von einem Autorisierungs-, Authentifizierungs- und Verrechnungs-, AAA, Server (1019) einer AAA-Anfragenachricht (1211), enthaltend erste Informationen, die einen Beginn eines lokalen Routings angeben, falls ein Strom zwischen einer ersten mobilen Station, MS, und einer zweiten MS ein lokaler Routing-Kandidat ist;
Empfangen einer Inter-ASN-Anfragenachricht (1215), enthaltend die ersten Informationen, von einem zweiten ASN-GW (1013-2), das nicht das erste ASN-GW (1013-1) ist;
Senden an das zweite ASN-GW (1013-2) einer Inter-ASN-Antwortnachricht (1217), enthaltend zweite Informationen, die den Beginn des lokalen Routings in Antwort auf die Inter-ASN-Anfragenachricht angeben; und
Senden einer AAA-Antwortnachricht (1219), enthaltend die zweiten Informationen an den AAA-Server,
Empfangen einer AAA-Anfragenachricht (1227), enthaltend Informationen, die einen Stopp des lokalen Routings angeben,
wobei das lokale Routing auf einer Übereinstimmung unter Instanzen beruht, die am lokalen Routing beteiligt sind.

7. Lokales Routingverfahren eines Autorisierungs-, Authentifizierungs- und Verrechnungs-, AAA, Servers (1019) in einem mobilen Kommunikationssystem, das Verfahren umfassend:
Senden einer AAA-Anfragenachricht (1211), enthaltend erste Informationen, die einen Beginn eines lokalen Routings angeben, an ein erstes zugangsbedienendes Netzwerk-Gateway, ASN-GW, (1013-1), falls ein Strom zwischen einer ersten mobilen Station, MS, und einer zweiten MS ein lokaler Routing-Kandidat ist;
Senden an ein zweites ASN-GW (1013-2) einer AAA-Anfragenachricht, enthaltend die ersten Informationen und zweiten Informationen, die angeben, dass das zweite ASN-GW das lokale Routing übernehmen wird; und
Empfangen von jedem des ersten ASN-GW (1013-1) und des zweiten ASN-GW (1013-2) einer AAA-Antwortnachricht (1219, 1221), enthaltend dritte Informationen, die angeben, dass das lokale Routing (1223) beginnen wird, und
Senden einer AAA-Anfragenachricht (1225), enthaltend Informationen, die einen Stopp des lokalen Routings angeben, an das zweite ASN-GW (1013-2).

8. Zugangsbedienendes Netzwerk-Gateway, ASN-GW (613, 813, 1013-1, 1013-2), das zum Durchführen des Verfahrens nach einem der Ansprüche 1, 3, 5 und 6 ausgebildet ist.

9. Autorisierungs-, Authentifizierungs- und Verrechnungs-, AAA, Server (619, 819-1, 819-2, 1019), der zum Durchführen des Verfahrens nach einem der Ansprüche 2, 4 und 7 ausgebildet ist.

## Revendications

1. Procédé de routage local d'une passerelle de réseau de desserte d'accès, ASN-GW, (613, 813, 1013-1, 1013-2) dans un système de communication mobile, le procédé comprenant de :
recevoir un message de demande d'autorisation, authentification et comptabilisation AAA (711, 1111, 1211) incluant une information indiquant un début de routage local à partir d'un serveur AAA (619, 819-1, 819-2, 1019), si un flux entre une première station mobile MS (615-1, 815-1, 1015-1) et une seconde MS (615-2, 815-2, 1015-2) est un candidat de routage local ;
effectuer le routage local (715, 919, 1123, 1223) entre la première MS et la seconde MS après la transmission au serveur AAA d'un message de réponse AAA (713, 1119, 1121, 1221) incluant une information indiquant que le routage local commencera en réponse au message de demande AAA,
déterminer si le routage local (715, 919, 1123, 1223) doit être terminé pendant le routage local entre la première MS et la seconde MS ; et
terminer le routage local (719, 925, 1129, 1229), si il est déterminé que le routage local doit être terminé pendant le routage local entre la première MS et la seconde MS,
dans lequel le routage local est basé sur le consentement parmi les entités impliquées dans le routage local, et
dans lequel la détermination comprend de déterminer la fin du routage local, quand au moins une de la première MS et la seconde MS est déconnectée de l'ASN-GW ou un message de demande AAA (717, 1125, 1127, 1225, 1227) incluant une information indiquant un arrêt du routage local est reçu depuis le serveur AAA.

2. Procédé de routage local d'un serveur d'autorisation, authentification et comptabilisation AAA (619-819-1, 819-2, 1019) dans un système de communication mobile, le procédé comprenant de :
transmettre un message de demande AAA (711, 1111, 1211) incluant une information indiquant un début de routage local à une passerelle de réseau de desserte accès, ASN-GW, si un flux entre une première station mobile MS (615-1, 815-1, 1015-1) et une seconde MS (615-2, 815-2, 1015-2) est un candidat de routage local ; et
recevoir de l'ASN-GW, (613, 813, 1013-1, 1013-2) un message de réponse (713, 1119, 1121, 1221) incluant une information indiquant que le routage local démarrera en réponse au message de demande AAA,
transmettre un message de demande AAA (717, 1125, 1127, 1225, 1227) incluant une information indiquant un arrêt du routage local à l'ASN-GW.

3. Procédé de routage local d'une passerelle de réseau de desserte d'accès, ASN-GW, dans le système de communication mobile, le procédé comprenant de :
transmettre un message de demande d'autorisation, authentification et comptabilisation (911, 913) incluant une information indiquant un début de routage local à un premier serveur AAA (819-1) et un second serveur AAA (819-2), si un flux entre une première station mobile MS (615-1, 815-1, 1015-1) et une seconde MS (615-2, 815-2, 1015-2) est un candidat de routage local ;
recevoir du premier serveur AAA un message de réponse AAA (915) incluant une première information indiquant que le routage local commencera en réponse au message de demande AAA ;
recevoir du second serveur AAA un message de réponse AAA (917) incluant la première information ;
effectuer le routage local (919) entre la première MS et la seconde MS,
déterminer si le routage local (715, 919, 1123, 1223) doit être terminé pendant le routage local entre la première MS et la seconde MS ; et
terminer le routage local (719, 925, 1129, 1229), si il est déterminé que le routage local doit être terminé pendant le routage local entre la première MS et la seconde MS,
dans lequel le routage local est basé sur le consentement parmi les entités impliquées dans le routage local, et
dans lequel la détermination comprend de déterminer de terminer le routage local, quand au moins une de la première MS et la seconde MS est déconnectée de l'ASN-GW ou à la réception d'un message de réponse AAA (922, 924) en réponse à un message de demande AAA (921, 923) incluant une information indiquant un arrêt de routage local est reçu depuis au moins un du premier serveur AAA (819-1) et du second serveur AAA (819-2).

4. Procédé de routage local d'une passerelle de réseau de desserte d'accès, ASN-GW, (619, 819-1, 819-2, 1019) dans un système de communication mobile, le procédé comprenant de :
recevoir un message de demande AAA (911, 913) incluant une information indiquant le début d'un routage local depuis une passerelle de réseau de desserte d'accès, ASN-GW (813), si un flux entre une première station mobile MS (615-1, 815-1, 1015-1) et une seconde MS (615-2, 815-2, 1015-2) est un candidat de routage local ;
transmettre à l'ASN-GW un message de réponse AAA (915, 917) incluant une information indiquant que le routage local commencera en réponse au message de demande AAA ; et
transmettre un message de réponse AAA (922, 924) indiquant un arrêt du routage local vers l'ASN-GW,
dans lequel le routage local (919) est basé sur le consentement parmi les entités impliquées dans le routage local.

5. Procédé de routage local d'une passerelle de réseau de desserte d'accès, ASN-GW (1013-2) dans un système de communication mobile, le procédé comprenant de :
recevoir d'un serveur d'autorisation, authentification et comptabilisation AAA (1019) un message de demande (1213) incluant une première information et une seconde information, la première information indiquant un début du routage local et la seconde information indiquant que l'ASN-GW (1013-2) prendra en charge le routage local, si un flux entre une première station mobile MS et une seconde station mobile est un candidat de routage local ;
transmettre un message de demande inter ASN (1215) incluant la première information à un second ASN-GW (1013-1) autre que l'ASN-GW (1013-2) ;
recevoir du second ASN-GW un message de réponse inter ASN (1217) incluant une troisième information indiquant le début du routage local en réponse au message de demande inter ASN ;
transmettre un message de réponse AAA (1221) incluant la troisième information au serveur AAA ;
effectuer le routage local (1223) entre la première MS et la seconde MS après la transmission du message de réponse AAA au serveur AAA ;
déterminer si le routage local doit être terminé pendant le routage local entre la première MS et la seconde MS ; et
terminer le routage local, si il est déterminé que le routage local doit être terminé pendant le routage local entre la première MS et la seconde MS,
dans lequel le routage local est basé sur le consentement parmi les entités impliquées dans le routage local, et
dans lequel la détermination comprend de déterminer la fin du routage local, quand la première MS est déconnectée du second ASN-GW (1013-1), la seconde MS est déconnectée du second ASN-GW (1013-1) ou un message de demande AAA (1225) incluant une information indiquant un arrêt du routage local est reçu du serveur AAA (1019).

6. Procédé de routage local d'une première passerelle de réseau de desserte d'accès, ASN-GW (1013-1) dans un système de communication mobile, le procédé comprenant de :
recevoir d'un serveur d'autorisation, authentification et comptabilisation AAA (1019) un message de demande AAA (1211) incluant une première information indiquant un début de routage local, si un flux entre une première station mobile MS et une seconde MS est un candidat de routage local ;
recevoir un message de demande inter ASN (1215) incluant la première information provenant d'un second ASN-GW (1013-2) autre que le premier ASN-GW (1013-1) ;
transmettre au second ASN-GW (1013-2) un message de réponse inter ASN (1217) incluant une seconde information indiquant le début du routage local en réponse au message de demande inter ASN ; et
transmettre un message de réponse AAA (1219) incluant la seconde information au serveur AAA,
recevoir un message de demande AAA (1227) incluant une information indiquant un arrêt du routage local,
dans lequel le routage local est basé sur le consentement parmi les entités impliquées dans le routage local.

7. Procédé de routage local d'un serveur d'autorisation, authentification et comptabilisation AAA (1019) dans un système de communication mobile, le procédé comprenant de :
transmettre un message de demande AAA (1211) incluant une première information indiquant un début de routage local à une première passerelle de réseau de desserte d'accès, ASN-GW (1013-1), si un flux entre une première station mobile MS et une seconde MS est un candidat de routage local ;
transmettre à un second ASN-GW (1013-2) un message de demande AAA incluant la première information et la seconde information indiquant que le second ASN-GW prendra en charge le routage local ; et
recevoir de chacun du premier ASN-GW (1013-1) et du second ASN-GW (1013-2) un message de réponse AAA (1219,1221) incluant une troisième information indiquant que le routage local (1223) commencera, et
transmettre un message de demande AAA (1225) incluant une information indiquant un arrêt du routage local vers le second ASN-GW (1013-2).

8. Passerelle de réseau de desserte d'accès, ASN-GW (613, 813, 1013-1, 1013-2) adaptée pour mettre en oeuvre le procédé selon une des revendications 1, 3, 5 et 6.

9. Serveur d'autorisation, authentification et comptabilisation AAA (619, 819-1, 819-2, 1019) adapté pour mettre en oeuvre le procédé selon une des revendications 2,4 et 7.
